# EUROPEAN PATENT SPECIFICATION

(11) **EP 2 648 434 B1**
(45) Date of publication and mention of the grant of the patent: **26.12.2018**
(21) Application number: 11844357.1
(22) Date of filing: 29.11.2011
(51) Int. Cl.: H04W 8/30, H04M 3/00, H04W 24/04, H04W 88/16, H04W 76/10, H04W 76/20, H04W 76/00, H04L 29/06, H04W 76/19

(54) **MOBILE COMMUNICATION METHOD, GATEWAY DEVICE, MOBILE MANAGEMENT NODE AND CALL SESSION CONTROL SERVER DEVICE**
MOBILKOMMUNIKATIONSVERFAHREN, GATEWAYVORRICHTUNG, MOBILVERWALTUNGSKNOTEN UND SERVERVORRICHTUNG ZUR STEUERUNG VON RUFSITZUNGEN
PROCÉDÉ DE COMMUNICATION MOBILE, DISPOSITIF DE PASSERELLE, NOEUD DE GESTION MOBILE ET DISPOSITIF DE SERVEUR DE COMMANDE DE SESSION D'APPEL

(30) Priority: 03.12.2010 JP 2010270918
(43) Date of publication of application: 09.10.2013
(73) Proprietor: NEC Corporation, Tokyo 108-8001 (JP)
(72) Inventor: NISHIDA, Katsutoshi, Tokyo 100-6150 (JP); TAMURA, Toshiyuki, Tokyo 108-8001 (JP)
(74) Representative: MacDougall, Alan John Shaw
(86) International application number: PCT/JP2011/077484
(87) International publication number: WO 2012/073937

(56) References cited:
- "3rd Generation Partnership Project; Technical Specification Group Core Network and Terminals; Study on PCRF failure and restoration (Release 9)", 3GPP STANDARD; 3GPP TR 29.816, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.1.0, 25 May 2010 (2010-05-25), pages 1-60, XP050441469, [retrieved on 2010-05-25]
- "3rd Generation Partnership Project; Technical Specification Group Core Network; Restoration procedures (Release 9)", 3GPP STANDARD; 3GPP TS 23.007, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 17 December 2009 (2009-12-17), pages 1-38, XP050400947, [retrieved on 2009-12-17]
- NEC: 'PCRF Failure (High level principle)' 3GPP TSG CT3 MEETING #60, CT4 MEETING #51 C4-103013, [Online] 15 November 2010, XP050591824 Retrieved from the Internet: <URL:http: //www.3gpp.org/ftp/tsg ct/WG4_protocollars_ex- CN4/TSGCT4 51 Jacksonville/Docs/C4-103013.zip> [retrieved on 2012-01-05]
- HUAWEI ET AL.: 'Requirements for PCRF failure and restoration' 3GPP TSG CT4 MEETING #50BIS C4-102502, [Online] 11 October 2010, XP050447828 Retrieved from the Internet: <URL:http://www.3gpp.org/ftp/tsg_ct/ WG4_protocollars ex-CN4/TSGCT4_50bis_Barcelona/ Docs/C4-102502.zip> [retrieved on 2012-01-05]

## Description

### Technical Field

The present invention relates to a mobile communication method, a gateway apparatus, a mobility management node, and a call session control server apparatus.

### Background Art

In the 3GPP, the architecture of a mobile communication system called SAE (System Architecture Evolution) is under review.

3rd Generation Partnership Project; Technical Specification Group Core Network and Terminals; Study on PCRF failure and restoration (Release 9); 3GPP TR 29.816 V1.1.0 (2010-05) discloses that in a single PCRF (Policy and Charging Rules Function) deployment, during the time of the partial node failure, the PCRF may be able to provide limited service and also perform to some extent recovery handling for the sessions affected by the partial failure. Several solutions are presented in the document, including soft recovery after a PCRF restart.

### Citation List

### Non Patent Literature

NPL1: 3GPP TS 23.401
NPL2: 3GPP TS 23.203

### Summary of Invention

### Technical Problem

However, regarding the existing SAE mobile communication system, nothing is specified for operations in the case where a failure occurs in the PCRF (Policy and Charging Rules Function; policy and charging server apparatus), or where the PCRF resumes after the occurrence of such a failure.

Thus, in the existing SAE mobile communication system, there is an issue that, when a failure occurs in the PCRF or when the PCRF resumes after the occurrence of such a failure, transmission and reception of communications related to PCC (Policy and Charging Control) cannot be carried out even after the failure is recovered.

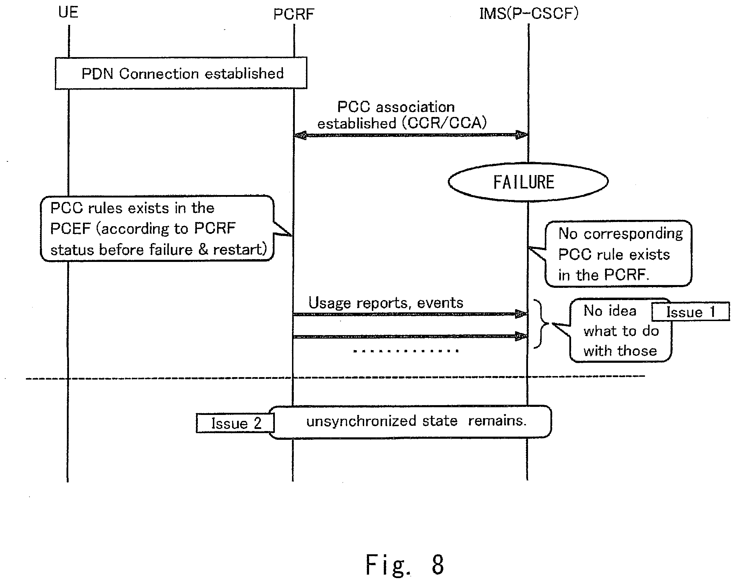

For example, as shown in Fig. 8, in the existing SAE mobile communication system, there is an issue that, even when the PCRF that is recovered from a failure receives a PCC control signal such as "Usage reports" from S/P-GW (Serving/PDN Gateway; gateway apparatus), the PCRF has no idea what to do with those because of not having a corresponding PCC profile (Issue 1).

Further, as shown in Fig. 8, in the existing SAE mobile communication system, there is an issue that, when a failure occurs in the PCRF and is then recovered, the unsynchronized state between the S/P-GW and the PCRF remains (Issue 2).

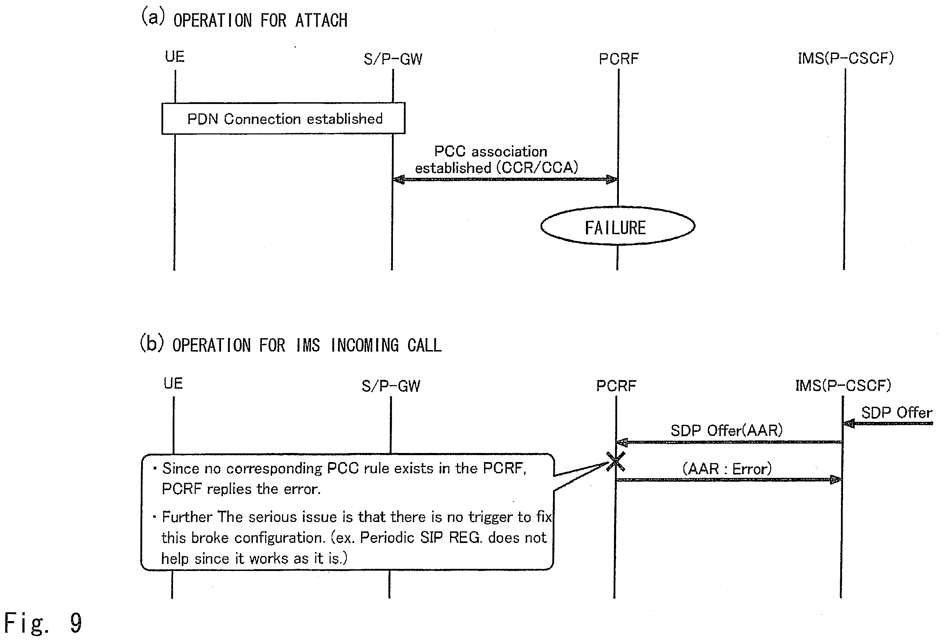

Furthermore, as shown in Fig. 9, in the existing SAE mobile communication system, there is an issue that, even when the PCRF that is recovered from a failure receives an incoming signal ("SDP Offer (AAR)") addressed to UE from P-CSCF (Proxy-Call Session Control Function) in the IMS (IP Multimedia Subsystem), the PCRF replies an error ("AAR: Error") to the P-CSCF because of not having a corresponding PCC profile.

Further, in the existing SAE mobile communication system, there is an issue that, when a failure occurs in the PCRF, communications related to PCRF control cannot be made regardless of the IMS.

Furthermore, in the existing SAE mobile communication system, there is an issue that dynamic charging control concerning a failure of the PCRF cannot be made.

Based on the above issues, an object of the present invention is to provide a mobile communication method, a gateway apparatus, a mobility management node and a call session control server apparatus that can carry out transmission and reception of communications utilizing PCC control when a failure occurs in the PCRF or when the PCRF resumes after the occurrence of such a failure.

### Solution to Problem

In a first aspect of the invention, there is provided a communication method for a mobile communication system including a mobile station, UE, a PDN gateway, PGW, and a Policy and Charging Rules Function, PCRF, the communication method comprising: establishing a Packet Data Network, PDN, connection by the UE; and releasing the PDN connection by the PGW upon restart of the PCRF since the PDN connection has been established, on the basis of a procedure with a cause set to Reactivation Requested.

In a second aspect of the invention, there is provided a mobile communication system comprising: a mobile station, UE; a PDN gateway, PGW; and a Policy and Charging Rules Function, PCRF, wherein the UE is configured to establish a Packet Data Network, PDN, connection, and wherein the PGW is configured to release the PDN connection upon restart of the PCRF since the PDN connection has been established, on the basis of a procedure with a cause set to Reactivation Requested.

In a third aspect of the invention, there is provided a PDN gateway, PGW, used in a mobile communication system including a mobile station, UE, and a Policy and Charging Rules Function, PCRF, the PGW comprising: means for releasing a Packet Data Network, PDN, connection upon restart of the PCRF since the PDN connection has been established, on the basis of a procedure with a cause set to Reactivation Requested.

In a fourth aspect of the invention, there is provided a mobile station used in a mobile communication system including a Mobility Management Entity, MME, and/or a Serving GPRS Support Node, SGSN, a PDN Gateway, PGW, and a Policy and Charging Rules Function, PCRF, the mobile station comprising: means for establishing a Packet Data Network, PDN, connection, wherein the means re-establishes the PDN connection if the PGW releases the PDN connection upon restart of the PCRF since the PDN connection has been established, on the basis of a procedure with a cause set to Reactivation Requested.

In a fifth aspect of the invention, there is provided a control method for a mobile station used in a mobile communication system including a Mobility Management Entity, MME, and/or a Serving GPRS Support Node, SGSN, a PDN Gateway, PGW, and a Policy and Charging Rules Function, PCRF, the control method comprising: establishing a Packet Data Network, PDN, connection; and re-establishing the PDN connection if the PGW releases the PDN connection upon restart of the PCRF since the PDN connection has been established, on the basis of a procedure with a cause set to Reactivation Requested.

### Advantageous Effects of Invention

As described above, according to the present invention, it is possible to provide a mobile communication method, a gateway apparatus, a mobility management node and a call session control server apparatus that can carry out transmission and reception of communications utilizing PCC control when a failure occurs in the PCRF or when the PCRF resumes after the occurrence of such a failure.

### Brief Description of Drawings

Fig. 1 is an overall block diagram of a mobile communication system according to a first embodiment of the present invention;
Fig. 2 is a sequence chart illustrating an operation of the mobile communication system according to the first embodiment of the present invention;
Fig. 3 is a sequence chart illustrating an operation of the mobile communication system according to the first embodiment of the present invention;
Fig. 4 is a sequence chart illustrating an operation of the mobile communication system according to the first embodiment of the present invention;
Fig. 5 is a sequence chart illustrating an operation of a mobile communication system according to a third alternative example of the first embodiment of the present invention;
Fig. 6 is an overall block diagram of the mobile communication system according to the first embodiment of the present invention;
Fig. 7 is a sequence chart illustrating an operation of the mobile communication system according to the first embodiment of the present invention;
Fig. 8 is a diagram illustrating a problem of a mobile communication system according to related art; and
Fig. 9 is a diagram illustrating a problem of a mobile communication system according to related art.

### Description of Embodiments

### [First embodiment of the invention]

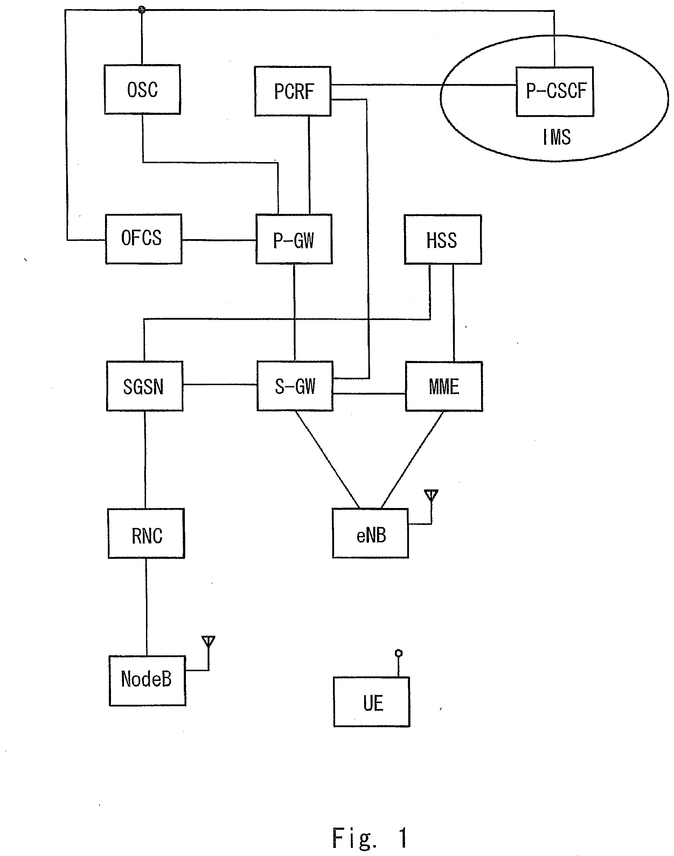

A mobile communication system according to a first embodiment of the present invention is described hereinafter with reference to Figs. 1 to 7.

The mobile communication system according to this embodiment is SAE mobile communication system and, specifically, includes E-UTRAN (Evolved-Universal Terrestrial Radio Access Network) including eNB (radio base station), UTRAN (Universal Terrestrial Radio Access Network) including NodeB (radio base station) and RNC (Radio Network Controller), MME (Mobility Management Entity; mobility management node), SGSN (Serving GPRS Support Node; packet switch node), S/P-GW, HSS (Home Subscriber Server; subscriber management server), IMS, OCS (Online Charging System), OFCS (Offline Charging System) and the like as shown in Fig. 1.

Further, the IMS includes P-CSCF, I/S-CSCF (Interogation/Serving-Call Session Control Function) (not shown), SCC AS (Service Centralization and Continuity Application Server) (not shown) and the like.

In the mobile communication system according to this embodiment, a UE is configured to be able to perform communications utilizing PCC control by use of a PDN (Packet Data Network) connection, a PCC connection #1 and a PCC connection #2.

The PDN connection is established between the UE and the S/P-GW, the PCC connection #1 is established between the PCRF and the S/P-GW, and the PCC connection #2 is established between the PCRF and the P-CSCF.

In the case where the PCC connection #1 and the PCC connection #2 are established, the S/P-GW and the P-CSCF operate as PCRF clients.

Further, in the mobile communication system according to this embodiment, the PCC connection #2 may not be established, or three or more PCC connections may be established.

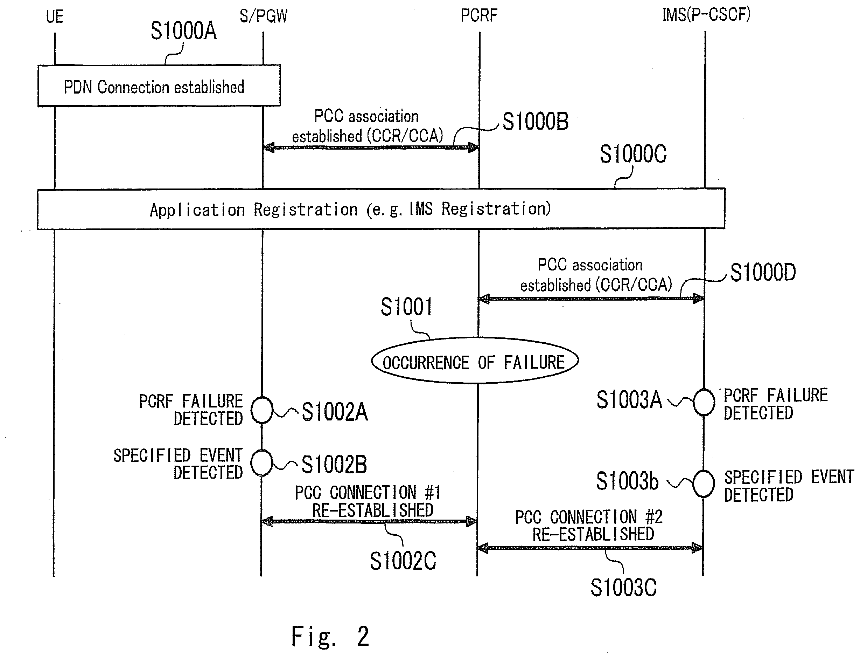

The operation of the mobile communication system according to this embodiment is described hereinafter with reference to Figs. 2 to 7.

First, the outline of the operation of the mobile communication system according to this embodiment is described hereinafter with reference to Fig. 2.

As shown in Fig. 2, in Step S1000A, the PDN connection is established between the UE and the S/P-GW and, in Step S1000B, the PDN connection is associated with the PCC connection #1 that is established between the PCRF and the S/P-GW. In Fig. 2, the S/P-GW may be equipped with the functions of S-GW and P-GW, the function of P-GW only, or the function of S-GW only.

In Step S1000C, "Application Registration" such as "IMS Registration", for example, is made for the UE, and, in Step S1000D, the PDN connection, the PCC connection #1 and the PCC connection #2 are associated with each other.

After that, when the S/P-GW detects the occurrence of a failure in the PCRF (Step S1001) in Step S1002A and then detects a specified event in Step S1002B, the S/P-GW re-establishes the association between the PDN connection and the PCC connection #1 in Step S1002C. In such a case, the re-establishment of the PCC connection #1 may be performed concurrently.

Likewise, when the P-CSCF detects the occurrence of a failure in the PCRF (Step S1001) in Step S1003A and then detects a specified event in Step S1003B, the P-CSCF re-establishes the association between the PCC connection #1 and the PCC connection #2 in Step S1003C. In such a case, the re-establishment of the PCC connection #2 may be performed concurrently.

In Steps S1002A and S1003A, the PCRF clients such as the S/P-GW and the P-CSCF may detect the occurrence of a failure in the PCRF or detect the restart of the PCRF (i.e., the recovery of the failure). The same applies below in this embodiment.

The S/P-GW and the P-CSCF may perform the above-described re-establishment after the lapse of a certain period of time from the detection of the occurrence of a failure in the PCRF (Step S1001).

The specified event may be reception of an incoming signal (e.g., "INVITE") addressed to the UE, C-Plane processing (e.g., change of bearer state) related to the UE, transmission and reception of U-Plane data related to the UE or the like.

Further, when the PCRF clients such as the S/P-GW and the P-CSCF detect a failure in the PCRF in Steps S1002A and S1003A, they may send a notification to the OCS or the OFCS, and the OCS or the OFCS may carry out specified charging control.

It should be noted that the present invention may be applied to the case where communication with the PCRF cannot be made, not limited to the case where a failure in the PCRF occurs. The same applies below.

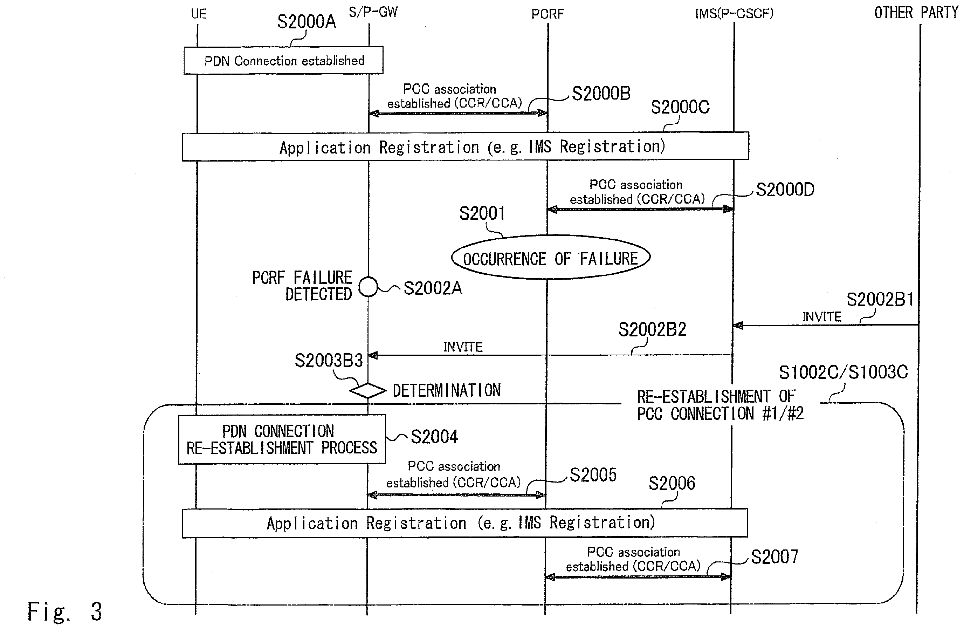

Second, a specific example 1 of the operation of the mobile communication system according to this embodiment is described hereinafter with reference to Fig. 3.

As shown in Fig. 3, the operations in Steps S2000A to S2001 are the same as the operations in Steps S1000A to S1001 in Fig. 2.

In Step S2002A, upon detecting the occurrence of a failure in the PCRF (Step S2001), the P-GW sets "PCRF failure flag" to information about the UE (e.g., EPS (Evolved Packet System) bearer context).

The "PCRF failure flag" may be set by the P-GW and also set by the S-GW.

After that, the P-CSCF receives "INVITE" addressed to the UE from the other party of communication in Step S2002B1, and sends the received "INVITE" to the S/P-GW in Step S2002B2.

In Step S2002B3, when the P-GW receives "INVITE" addressed to the UE corresponding to the EPS bearer context to which "PCRF failure flag" is set, the P-GW determines whether or not to re-establish the association among the PDN connection, the PCC connection #1 and the PCC connection #2.

In this step, the P-GW may determine whether or not to perform the above mentioned re-establishment based on at least one of a UE state (for example, whether it is under communication) and a congestion status. The congestion status may be a congestion status of a network (a core network or a radio access network), a congestion status of the PCRF or the like.

Note that, the MME, in place of the S/P-GW, may make the determination in Step S2002B3. The MME may make the determination based on whether the UE is in "IDLE state" or "ACTIVE state".

For example, in the case where the UE is "ACTIVE state", the MME may determine to perform the process of re-establishing the PDN connection at the point of time when a certain period of time has elapsed or when the UE has transitioned to the "IDLE state".

On the other hand, in the case where the UE is "IDLE state", the MME may determine to perform the process of re-establishing the PDN connection immediately or after a load distribution timer expires.

In Step S2004, the process of re-establishing the PDN connection is performed. The S/P-GW may delete the "PCRF failure flag" that is set to the EPS bearer context for the UE after completion of the re-establishment of the PDN connection.

After completion of the process of re-establishing the PDN connection, the association between the re-established PDN connection and the PCC connection #1 is re-established in Step S2005. It is assumed that the PCC connection #1 is re-established when the failure in the PCRF has been recovered. On the other hand, when the failure in the PCRF has not been recovered, the PCC connection #1 may be re-established by making a connection to another PCRF.

In Step S2006, "Application Registration" for the UE is performed.

In Step S2007, the association among the PDN connection, the PCC connection #1 and the PCC connection #2 is made. It is assumed that the PCC connection #2 is re-established when the failure in the PCRF has been recovered. On the other hand, when the failure in the PCRF has not been recovered, the PCC connection #2 may be re-established by making a connection to another PCRF.

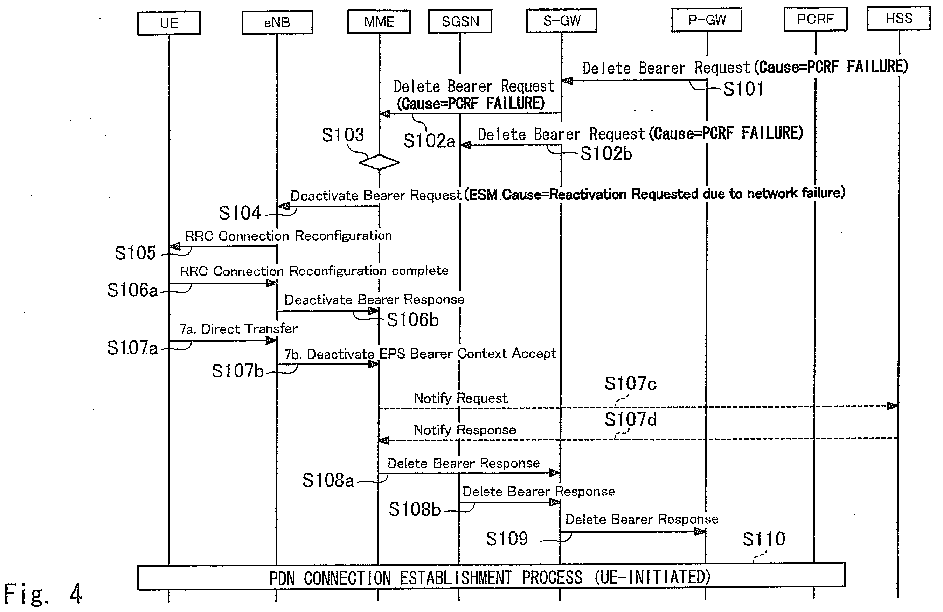

The detailed operation of the above-mentioned PDN connection re-establishment process is described hereinafter with reference to Figs. 4 to 6.

First, an operation example 1 of the PDN connection re-establishment process is described with reference to Fig. 4.

As shown in Fig. 4, the P-GW sends "Delete Bearer Request" containing "Cause=PCRF failure" to the S-GW in Step S101. The "Delete Bearer Request" is a message requesting to release the PDN connection related to the UE.

The S-GW sends the "Delete Bearer Request" containing "Cause=PCRF failure" to the MME in Step S102a, and sends the "Delete Bearer Request" containing "Cause=PCRF failure" to the SGSN in Step S102b.

The P-GW or the S-GW may send the existing partial filer message or the existing or new message (for example, a failure notification signal etc.), instead of the "Delete Bearer Request" containing "Cause=PCRF failure".

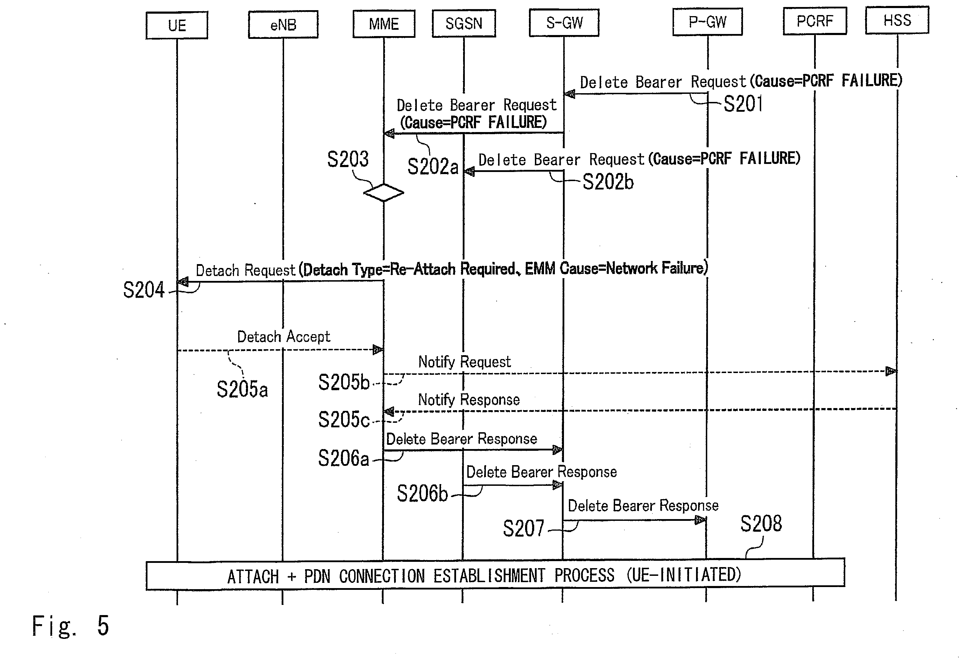

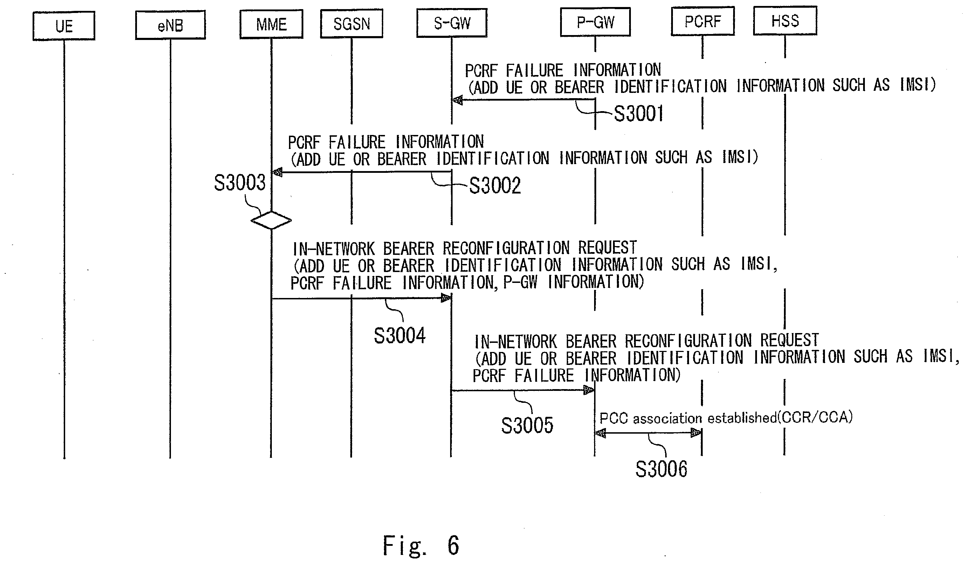

In Step S103, the MME determines whether to send "Deactivate Bearer Request" to the eNB (Fig. 4), send "Detach Request" to the UE (Fig. 5), or send "In-Network Bearer Reconfiguration Request" to the S-GW (Fig. 6).

In the example of Fig. 4, the MME determines to send "Deactivate Bearer Request" to the eNB in Step S103 and sends "Deactivate Bearer Request" containing "ESM Cause=Reactivation Requested due to network failure" to the eNB in Step S104.

A parameter different from "ESM Cause=Reactivation Requested due to network failure" may be set in the "Deactivate Bearer Request".

The eNB sends "RRC Connection Reconfiguration" to the UE in Step S105, and the UE sends "RRC Connection Reconfiguration Complete" to the eNB in Step S106a.

The eNB sends "Deactivate Bearer Response" to the MME in Step S106b.

The UE sends "Direct Transfer" to the eNB in Step S107a, and the eNB sends "Deactivate EPS Bearer Context Accept" to the MME in Step S107b.

The MME sends "Notify Request" to the HSS in Step S107c, and the HSS sends "Notify Response" to the MME in Step S107d. Step S107c and Step S107d may be skipped.

The MME sends "Delete Bearer Response" to the S-GW in Step S108a, and the SGSN sends "Delete Bearer Response" to the S-GW in Step S108b. Step S102b and Step SS108b may be skipped.

The S-GW sends "Delete Bearer Response" to the P-GW in Step S109, and the UE initiates the PDN connection establishment process in Step S1010.

Second, an operation example 2 of the PDN connection re-establishment process is described with reference to Fig. 5.

As shown in Fig. 5, the P-GW sends "Delete Bearer Request" containing "Cause=PCRF failure" to the S-GW in Step S201.

The S-GW sends the "Delete Bearer Request" containing "Cause=PCRF failure" to the MME in Step S202a, and sends the "Delete Bearer Request" containing "Cause=PCRF failure" to the SGSN in Step S202b.

The S-GW may send the existing partial filer message or the existing or new message (for example, a failure notification signal etc.), instead of the "Delete Bearer Request" containing "Cause=PCRF failure".

In Step S203, the MME determines whether to send "Deactivate Bearer Request" to the eNB (Fig. 4), send "Detach Request" to the UE (Fig. 5), or send "In-Network Bearer Reconfiguration Request" to the S-GW (Fig. 6).

In the example of Fig. 5, the MME determines to send "Detach Request" to the UE in Step S203 and sends "Detach Request" containing "Detach Type=Re-Attach Required" and "EMM Cause=Network Failure" to the UE in Step S204.

A parameter different from "Detach Type=Re-Attach Required" and "EMM Cause=Network Failure" may be set in the "Detach Request".

The UE performs a Detach process and sends "Detach Accept" to the MME in Step S205a.

The MME sends "Notify Request" to the HSS in Step S205b, and the HSS sends "Notify Response" to the MME in Step S205c. Step S205b and Step S205c may be skipped.

The MME sends "Delete Bearer Response" to the S-GW in Step S206a, and the SGSN sends "Delete Bearer Response" to the S-GW in Step S206b. Step S202b and Step S206b may be skipped.

The S-GW sends "Delete Bearer Response" to the P-GW in Step S207, and the UE initiates the Attach process and the PDN connection establishment process in Step S208.

Third, an operation example 3 of the PDN connection re-establishment process is described with reference to Fig. 6.

As shown in Fig. 6, in Step S3001, the P-GW sends "PCRF failure information (new message)" to the S-GW. The "PCRF failure information" contains at least one of UE identification information of the UE such as IMSI (International Mobile Subscriber Identity) and identification information of the bearer (the bearer composed of the PDN connection, the PCC connection #1 and the PCC connection #2).

Instead of the "PCRF failure information", the P-GW may send "Delete Bearer Request" containing "Cause=PCRF failure" described above, or may send the PCRF failure information using the existing partial filer message, another existing message or the like.

The S-GW sends the "PCRF failure information" to the MME in Step S3002. The "PCRF failure information" contains at least one of the identification information of the UE and the identification information of the bearer.

Instead of the "PCRF failure information", the S-GW may send "Delete Bearer Request" containing "Cause=PCRF failure", or may send the PCRF failure information using the existing partial filer message, another existing message or the like.

In Step S3003, the MME determines whether to send "Deactivate Bearer Request" to the eNB (Fig. 4), send "Detach Request" to the UE (Fig. 5), or send "In-Network Bearer Reconfiguration Request" to the S-GW (Fig. 6).

In the example of Fig. 6, the MME determines to send "In-Network Bearer Reconfiguration Request" to the S-GW in Step S3003 and sends "In-Network Bearer Reconfiguration Request" to the S-GW in Step S3004.

The MME may send the existing "Create Session Request", "Modify Bearer Request" or the like instead of the "In-Network Bearer Reconfiguration Request".

The "In-Network Bearer Reconfiguration Request" contains the identification information of the UE, the identification information of the bearer, the "PCRF failure information" described above, P-GW information and the like.

The S-GW sends the "In-Network Bearer Reconfiguration Request" to the P-GW in Step S3005. The "In-Network Bearer Reconfiguration Request" contains at least one of the identification information of the UE and the identification information of the bearer, the "PCRF failure information" described above and the like.

The S-GW may send the existing "Create Session Request", "Modify Bearer Request" or the like instead of the "In-Network Bearer Reconfiguration Request".

In Step S3006, the P-GW overwrites the information related to the PCC connection #1 and re-establishes the association between the PDN connection and the PCC connection #1. Further, the association among the PDN connection, the PCC connection #1 and the PCC connection #2 may be also re-established in this step.

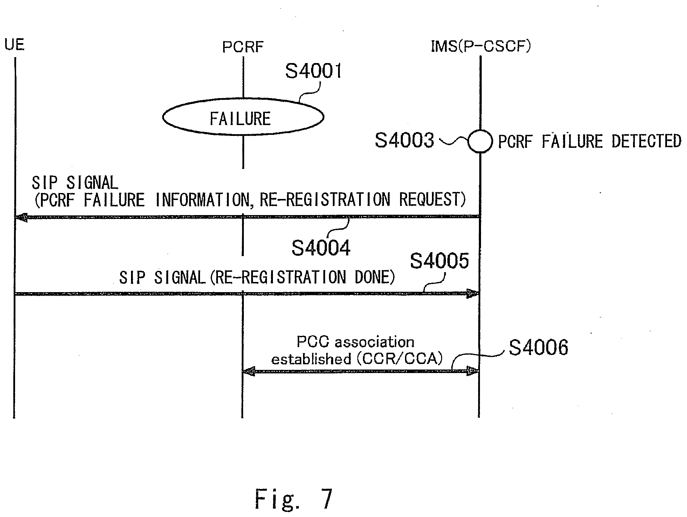

A specific example 2 of the operation of the mobile communication system according to this embodiment is described hereinafter with reference to Fig. 7.

The P-CSCF detects the occurrence of a failure in the PCRF (Step S4001) in Step S4003 and then sends a SIP signal to the UE in Step S4004. The SIP signal contains at least one of "PCRF failure information" indicating the occurrence of a failure in the PCRF and "Re-Registration request" requesting re-registration to the UE.

The re-registration may be "Application Registration" such as "IMS Registration".

In Step S4005, the UE carries out the re-registration and sends a SIP signal indicating that to the P-CSCF.

In Step S4006, the association among the PDN connection, the PCC connection #1 and the PCC connection #2 is re-established. In this process, the re-establishment of the PCC connection #2 may be performed concurrently.

In the mobile communication system according to this embodiment, when a specified event is detected after the occurrence of a failure in the PCRF, the association among the PDN connection, the PCC connection #1 and the PCC connection #2 is re-established, and therefore it is possible to carry out transmission and reception of communications utilizing the PCC control.

The aspects of this embodiment described above may be represented as follows.

A first aspect of the embodiment is a mobile communication method to perform communications using a PDN connection (first connection) established between a UE (mobile station) and a P-GW (gateway apparatus) and a PCC connection #1 (second connection) established between a PCRF (policy and charging server apparatus) and the P-GW, the method including a step A of re-establishing, by the P-GW, association between the PDN connection and the PCC connection #1 in case of detecting a specified event after detecting a failure in the PCRF.

In the first aspect of the embodiment, in the step A, the P-GW may determine whether to perform the re-establishment based on at least one of a state of the UE and a congestion status.

In the first aspect of the embodiment, the step A may include a step of sending a PDN connection release request (for example, "Delete Bearer Request") from the P-GW to an MME (mobility management node) in case of detecting a specified event after detecting a failure in the PCRF, a step of requesting to release the PDN connection from the MME to an eNB (radio base station) in response to the PDN connection release request, a step of newly establishing a PDN connection after the PDN connection is released, and a step of associating the newly established PDN connection with the PCC connection #1.

In the first aspect of the embodiment, the step A may include a step of sending a PDN connection release request from the P-GW to the MME in case of detecting a specified event after detecting a failure in the PCRF, a step of requesting to perform a re-attach process from the MME to the UE, a step of performing a detach process for the UE and then an attach process for the UE and newly establishing a PDN connection, and a step of associating the newly established PDN connection with the PCC connection #1.

In the first aspect of the embodiment, the step A may include a step of sending a PDN connection release request from the P-GW to the MME in case of detecting a specified event after detecting a failure in the PCRF, a step of requesting to newly establish a PCC connection #1 from the MME to the P-GW without requesting to the eNB to release a radio connection between the eNB and the UE in the PDN connection, and a step of associating the PDN connection with the newly established PCC connection #1.

A second aspect of the embodiment is a mobile communication method to perform communications using a PDN connection established between a UE and a P-GW, a PCC connection #1 established between a PCRF and the P-GW, and a PCC connection #2 (third connection) established between the PCRF and a P-CSCF (call session control server apparatus), the method including a step A of re-establishing, by the P-CSCF, association among the PDN connection, the PCC connection #1 and the PCC connection #2 in case of detecting a specified event after detecting a failure in the PCRF.

In the second aspect of the embodiment, the step A may include requesting to make re-registration from the P-CSCF to the UE in case of detecting a specified event after detecting a failure in the PCRF, and re-establishing association among the PDN connection, the PCC connection #1 and the PCC connection #2 after the re-registration of the UE is made.

A third aspect of the embodiment is a P-GW configured to re-establish association between a PDN connection and a PCC connection #1 in case of detecting a specified event after detecting a failure in the PCRF.

A fourth aspect of the embodiment is an MME configured to request a UE to perform a re-attach process in case of receiving, from a P-GW, a PDN connection release request containing specified information (for example, Cause=PCRF failure) indicating detection of a failure in a PCRF.

A fifth aspect of the embodiment is an MME configured to request a P-GW to newly establish a PCC connection #2 without requesting an eNB to release a radio connection between the eNB and the UE in the PDN connection when a PDN connection release request containing specified information (for example, Cause=PCRF failure) indicating detection of a failure in a PCRF is received from the P-GW.

A fifth aspect of the embodiment is a P-CSCF configured to re-establish association among a PDN connection, a PCC connection #1 and a PCC connection #2 in case of detecting a specified event after detecting a failure in the PCRF.

The S-GW may have the function similar to that of the P-GW described above.

Note that the operations of the UE, eNB, MME, S-GW, P-GW, PCRF, P-CSCF and HSS described above may be implemented by hardware, implemented by a software module executed by a processor, or implemented by a combination of those.

The software module may reside in a storage medium in any form such as RAM (Random Access Memory), flash memory, ROM (Read Only Memory), EPROM (Erasable Programmable ROM), EEPROM (Electronically Erasable and Programmable ROM), register, hard disk removable disk or CD-ROM.

The storage medium is connected to a processor in such a way that the processor can read and write information on the storage medium. Further, the storage medium may be mounted on a processor. Furthermore, the storage medium and the processor may be included in ASIC. The ASIC may be included in UE, eNB, MME, S-GW, P-GW, PCRF, P-CSCF or HSS. Further, the storage medium and the processor may be included in UE, eNB, MME, S-GW, P-GW, PCRF, P-CSCF or HSS as discrete components.

While the invention has been particularly shown and described with reference to embodiments thereof, it will be obvious to those skilled in the art that the invention is not limited to these embodiments. Various changes in form and details may be made therein without departing from the scope of the present invention as defined by the claims. Thus, the description in this specification merely illustrates the embodiments of the invention and therefore does not limit the present invention.

### Reference Signs List

UE MOBILE STATION
eNB, NodeB RADIO BASE STATION
RNC RADIO NETWORK CONTROL NODE
MME MOBILITY MANAGEMENT NODE
SGSN PACKET SWITCH NODE
S-GW, P-GW GATEWAY APPARATUS
PCRF POLICY AND CHARGING SERVER APPARATUS
P-CSCF CALL SESSION CONTROL SERVER APPARATUS
HSS SUBSCRIBER INFORMATION MANAGEMENT SERVER APPARATUS

## Claims

1. A communication method for a mobile communication system including a mobile station, UE, a PDN gateway, PGW, and a Policy and Charging Rules Function, PCRF, the communication method comprising:
establishing (S1000A) a Packet Data Network, PDN, connection by the UE; and
releasing the PDN connection by the PGW upon restart of the PCRF since the PDN connection has been established, on the basis of a procedure with a cause set to Reactivation Requested.

2. The communication method according to claim 1, the method further comprising:
re-establishing (S2004) the PDN connection based on the cause by the UE.

3. The communication method according to claim 1 or 2, the method further comprising:
on the occasion of release of the PDN connection,
sending (S101) a Delete Bearer Request from the PGW to a Serving gateway, SGW; and
sending (S102a, S102b) the Delete Bearer Request from the SGW to a Mobility Management Entity, MME, and/or a Serving GPRS Support Node, SGSN.

4. The communication method according to claim 3, the method further comprising:
sending (S103) a Deactivate Bearer Request from the MME to a radio base station.

5. A mobile communication system comprising:
a mobile station, UE;
a PDN gateway, PGW; and
a Policy and Charging Rules Function, PCRF,
wherein the UE is configured to establish (S1000A) a Packet Data Network, PDN, connection, and
wherein the PGW is configured to release the PDN connection upon restart of the PCRF since the PDN connection has been established, on the basis of a procedure with a cause set to Reactivation Requested.

6. The mobile communication system according to claim 5, wherein the UE is configured to re-establish (S2004) the PDN connection based on the cause.

7. The mobile communication system according to claim 5 or 6, wherein:
on the occasion of release of the PDN connection,
the PGW is configured to send (S101) a Delete Bearer Request to a Serving gateway, SGW; and
the SGW is configured to send (S102a, S102b) the Delete Bearer Request to a Mobility Management Entity, MME, and/or a Serving GPRS Support Node, SGSN.

8. The mobile communication system according to claim 7, wherein the MME is configured to send (S103) a Deactivate Bearer Request to a radio base station.

9. A PDN gateway, PGW, used in a mobile communication system including a mobile station, UE, and a Policy and Charging Rules Function, PCRF, the PGW comprising:
means for releasing a Packet Data Network, PDN, connection upon restart of the PCRF since the PDN connection has been established, on the basis of a procedure with a cause set to Reactivation Requested.

10. A mobile station used in a mobile communication system including a Mobility Management Entity, MME, and/or a Serving GPRS Support Node, SGSN, a PDN Gateway, PGW, and a Policy and Charging Rules Function, PCRF, the mobile station comprising:
means for establishing (S1000A) a Packet Data Network, PDN, connection,
wherein the means re-establishes the PDN connection if the PGW releases the PDN connection upon restart of the PCRF since the PDN connection has been established, on the basis of a procedure with a cause set to Reactivation Requested.

11. A control method for a mobile station used in a mobile communication system including a Mobility Management Entity, MME, and/or a Serving GPRS Support Node, SGSN, a PDN Gateway, PGW, and a Policy and Charging Rules Function, PCRF, the control method comprising:
establishing (S1000A) a Packet Data Network, PDN, connection; and
re-establishing the PDN connection if the PGW releases the PDN connection upon restart of the PCRF since the PDN connection has been established, on the basis of a procedure with a cause set to Reactivation Requested.

## Patentansprüche

1. Kommunikationsverfahren für ein Mobilkommunikationssystem mit einer Mobilstation, UE, einem PDN-Gateway, PGW, und einer Policy and Charging Rules Function, PCRF, wobei das Kommunikationsverfahren die Schritte aufweist:
Einrichten (S1000A) einer Paketdatennetz-, PDN-, Verbindung durch die UE; und
Freigeben der PDN-Verbindung durch das PGW nach einem Neustart der PCRF, nachdem die PDN-Verbindung eingerichtet worden ist, auf der Basis einer Prozedur, deren Cause-Parameter auf "Reactivation Requested" gesetzt ist.

2. Kommunikationsverfahren nach Anspruch 1, wobei das Verfahren ferner aufweist:
erneutes Einrichten (S2004) der PDN-Verbindung basierend auf dem Cause-Parameter durch das UE.

3. Kommunikationsverfahren nach Anspruch 1 oder 2, wobei das Verfahren ferner die Schritte aufweist:
bei der Freigabe der PDN-Verbindung:
Übertragen (S101) eines Delete Bearer Request vom PGW an ein Serving Gateway, SGW; und
Übertragen (S102a, S102b) des Delete Bearer Request vom SGW an eine Mobility Management Entity, MME, und/oder an einen Serving GPRS Support Node, SGSN.

4. Kommunikationsverfahren nach Anspruch 3, wobei das Verfahren ferner aufweist:
Übertragen (S103) eines Deactivate Bearer Request von der MME an eine Funkbasisstation.

5. Mobilkommunikationssystem, mit:
einer Mobilstation, UE;
einem PDN-Gateway, PGW; und
einer Policy and Charging Rules Function, PCRF,
wobei das UE dafür konfiguriert ist, eine Paketdatennetz-, PDN-, Verbindung einzurichten (S1000A), und
wobei das PGW dafür konfiguriert ist, die PDN-Verbindung nach einem Neustart der PCRF, nachdem die PDN-Verbindung eingerichtet worden ist, auf der Basis einer Prozedur freizugeben, deren Cause-Parameter auf "Reactivation Requested" gesetzt ist.

6. Mobilkommunikationssystem nach Anspruch 5, wobei das UE dafür konfiguriert ist, die PDN-Verbindung basierend auf dem Cause-Parameter neu einzurichten (S2004).

7. Mobilkommunikationssystem nach Anspruch 5 oder 6, wobei:
bei der Freigabe der PDN-Verbindung:
das PGW dafür konfiguriert ist, einen Delete Bearer Request an ein Serving Gateway, SGW, zu übertragen (S101),
das SGW dafür konfiguriert ist, den Delete Bearer Request an eine Mobility Management Entity, MME, und/oder einen Serving GPRS Support Node, SGSN, zu übertragen (S102a, S102b).

8. Mobilkommunikationssystem nach Anspruch 7, wobei die MME dafür konfiguriert ist, einen Deactivate Bearer Request an eine Funkbasisstation zu übertragen (S103).

9. PDN-Gateway, PGW, das in einem Mobilkommunikationssystem verwendet wird, das eine Mobilstation, UE, und eine Policy and Charging Rules Function, PCRF, aufweist, wobei das PGW aufweist:
eine Einrichtung zum Freigeben einer Paketdatennetz-, PDN-, Verbindung nach einem Neustart der PCRF, nachdem die PDN-Verbindung eingerichtet worden ist, auf der Basis einer Prozedur, deren Cause-Parameter auf "Reactivation Requested" gesetzt ist.

10. Mobilstation, die in einem Mobilkommunikationssystem verwendet wird, das eine Mobile Management Entity, MME, und/oder einen Serving GPRS Support Node, SGSN, ein PDN-Gateway, PGW, und eine Policy and Charging Rules Function, PCRF, aufweist, wobei die Mobilstation aufweist:
eine Einrichtung zum Einrichten (S1000A) einer Paketdatennetz-, PDN-, Verbindung,
wobei die Einrichtung die PDN-Verbindung, wenn das PGW die PDN-Verbindung nach einem Neustart der PCRF freigibt, nachdem die PDN-Verbindung eingerichtet worden ist, auf der Basis einer Prozedur neu einrichtet, deren Cause-Parameter auf "Reactivation Requested" gesetzt ist.

11. Steuerverfahren für eine Mobilstation, das in einem Mobilkommunikationssystem verwendet wird, das eine Mobility Management Entity, MME, und/oder einen Serving GPRS Support Node, SGSN, ein PDN-Gateway, PGW, und eine Policy and Charging Rules Function, PCRF, aufweist, wobei das Steuerverfahren die Schritte aufweist:
Einrichten (S1000A) einer Paketdatennetz-, PDN-, Verbindung; und
erneutes Einrichten der PDN-Verbindung, wenn das PGW die PDN-Verbindung nach einem Neustart der PCRF freigibt, nachdem die PDN-Verbindung eingerichtet worden ist, auf der Basis einer Prozedur, deren Cause-Parameter auf "Reactivation Requested" gesetzt ist.

## Revendications

1. Procédé de communication pour un système de communication mobile incluant une station mobile, UE, une passerelle de PDN, PGW, et une fonction de règles de politique et de facturation, PCRF, le procédé de communication comprenant :
l'établissement (S1000A) d'une connexion de réseau de données par paquets, PDN, par l'UE ; et
la libération de la connexion de PDN par la PGW lors du redémarrage de la PCRF depuis que la connexion de PDN a été établie, sur la base d'une procédure avec une cause réglée sur Réactivation Demandée.

2. Procédé de communication selon la revendication 1, le procédé comprenant en outre :
le rétablissement (S2004) de la connexion de PDN d'après la cause par l'UE.

3. Procédé de communication selon la revendication 1 ou 2, le procédé comprenant en outre :
à l'occasion de la libération de la connexion de PDN,
l'envoi (S101) d'une Demande de Suppression de Porteuse, de la PGW à une passerelle de service, SGW ; et
l'envoi (S102a, S102b) de la Demande de Suppression de Porteuse de la SGW à une Entité de Gestion de Mobilité, MME, et/ou un Noeud de Support GPRS de Service, SGSN.

4. Procédé de communication selon la revendication 3, le procédé comprenant en outre :
l'envoi (S103) d'une Demande de Désactivation de Porteuse de la MME à une station radio de base.

5. Système de communication mobile comprenant :
une station mobile, UE ;
une passerelle de PDN, PGW ; et
une fonction de règles de politique et de facturation, PCRF,
dans lequel l'UE est configuré pour établir (S1000A) une connexion de réseau de données par paquets, PDN, et
dans lequel la PGW est configurée pour libérer la connexion de PDN lors du redémarrage de la PCRF depuis que la connexion de PDN a été établie, sur la base d'une procédure avec une cause réglée sur Réactivation Demandée.

6. Système de communication mobile selon la revendication 5, dans lequel l'UE est configuré pour rétablir (S2004) la connexion de PDN d'après la cause.

7. Système de communication mobile selon la revendication 5 ou 6, dans lequel :
à l'occasion de la libération de la connexion de PDN,
la PGW est configurée pour envoyer (S101) une Demande de Suppression de Porteuse à une passerelle de service, SGW ; et
la SGW est configurée pour envoyer (S102a, S102b) la Demande de Suppression de Porteuse à une Entité de Gestion de Mobilité, MME, et/ou un Noeud de Support GPRS de Service, SGSN.

8. Système de communication mobile selon la revendication 7, dans lequel la MME est configurée pour envoyer (S103) une Demande de Désactivation de Porteuse à une station radio de base.

9. Passerelle de PDN, PGW, utilisée dans un système de communication mobile incluant une station mobile, UE, et une fonction de règles de politique et de facturation, PCRF, la PGW comprenant :
un moyen pour libérer une connexion de réseau de données par paquets, PDN, lors du redémarrage de la PCRF depuis que la connexion de PDN a été établie, sur la base d'une procédure avec une cause réglée sur Réactivation Demandée.

10. Station mobile utilisée dans un système de communication mobile incluant une Entité de Gestion de Mobilité, MME, et/ou un Noeud de Support GPRS de Service, SGSN, une passerelle de PDN, PGW, et une fonction de règles de politique et de facturation, PCRF, la station mobile comprenant :
un moyen pour établir (S1000A) une connexion de réseau de données par paquets, PDN,
dans laquelle le moyen rétablit la connexion de PDN si la PGW libère la connexion de PDN lors du redémarrage de la PCRF depuis que la connexion de PDN a été établie, sur la base d'une procédure avec une cause réglée sur Réactivation Demandée.

11. Procédé de commande pour une station mobile utilisée dans un système de communication mobile incluant une Entité de Gestion de Mobilité, MME, et/ou un Noeud de Support GPRS de Service, SGSN, une passerelle de PDN, PGW, et une fonction de règles de politique et de facturation, PCRF, le procédé de commande comprenant :
l'établissement (S1000A) d'une connexion de réseau de données par paquets, PDN ; et
le rétablissement de la connexion de PDN si la PGW libère la connexion de PDN lors du redémarrage de la PCRF depuis que la connexion de PDN a été établie, sur la base d'une procédure avec une cause réglée sur Réactivation Demandée.
